# EUROPÄISCHE PATENTSCHRIFT

(11) **EP 1 557 397 B1**
(45) Veröffentlichungstag und Bekanntmachung des Hinweises auf die Patenterteilung: **25.07.2007**
(21) Anmeldenummer: 03027909.5
(22) Anmeldetag: 04.12.2003
(51) Int. Cl.: C02F 1/48, B01J 19/08

(54) **Verfahren und Vorrichtung zur Verhinderung und zum Abbau von verkrustenden Kalkablagerungen**
Method and device for preventing and reducing incrustations of limescale
Procédé et dispositif d'élimination et de réduction d'incrustation de tartre

(43) Veröffentlichungstag der Anmeldung: 27.07.2005
(73) Patentinhaber: Steingrüber Handelsgesellschaft mbH, 68161 Mannheim (DE)
(72) Erfinder: Klinger, Manfred, 67133 Maxdorf (DE)
(74) Vertreter: Kesselhut, Wolf

(56) Entgegenhaltungen:
- WO-A-92/18223
- DE-U- 9 218 403
- DE-U- 9 320 159
- DE-U- 20 300 247
- US-A- 4 999 106
- US-A- 5 804 067

## Beschreibung

Die Erfindung betrifft ein Verfahren und eine Vorrichtung zur Verhinderung und zum Abbau von verkrustenden Kalkablagerungen in Haushaltsgeräten, Rohrleitungen und dergleichen nach dem Oberbegriff von Anspruch 1 und 9.

Es ist bekannt, Wasser durch magnetische Wasserbehandlungsgeräte zu leiten, wobei zwei Plattenmagnete mit gleicher Polung beabstandet voneinander zwischen sich einen Durchflußraum begrenzen. Das Wasser durchfließt bei derartigen Vorrichtungen somit einen Abschnitt, bei dem ein Magnetfluß auf das Wasser einwirkt. Mit derartigen Anordnungen ist es sowohl im industriellen Bereich, wie z.B. Atomkraftwerken oder Großbrauereien aber auch in privaten Haushalten gelungen, für einen begrenzten Zeitraum den im Wasser befindlichen Kalk von einer Verkrustungen bildenden Form in eine einen weißen, nicht verkrustenden Niederschlag bildende Form zu überführen, wobei der Niederschlag für zumindest 24 Stunden nicht verkrustet.

In diesem Zusammenhang ist aus der US-A-5 804 067 ein Verfahren zur magnetischen Behandlung von carbonathaltigem Wasser bekannt, bei welchem nacheinander angeordnete, mit je einem Pol an den Durchströmungsraum angrenzende Magnetpaare Kalkablagerungen verhindern sollen. Die an den Durchströmungsraum angrenzenden Pole eines Magnetpaares sind hierbei gegenpolig geladen, wodurch der Magnetfeldvektor in Durchströmungsrichtung von einem Magnetpaar zum nächsten einen sprunghaften Richtungswechsel von 180° durchfährt, mit dem jedoch kein sich gleichsinnig Schräubenartig drehendes Magnetfeld über mehr als zwei nacheinander angeordneten Magnetpaare erzielt werden kann.

Weiterhin ist aus der US-A-5 804 067 ein Verfahren zur magnetischen Behandlung von carbonathaltigem Wasser bekannt, bei welchem nacheinander angeordnete, mit je einem Pol an den Durchströmungsraum angrenzende Magnetpaare Kalkablagerungen verhindern sollen. Die an den Durchströmungsraum angrenzenden Pole eines Magnetpaares sind hierbei gegenpolig geladen, wodurch der Magnetfeldvektor in Durchströmungsrichtung von einem Magnetpaar zum nächsten einen sprunghaften Richtungswechsel von 180° durchfährt, mit dem jedoch kein sich gleichsinnig Schräubenartig drehendes Magnetfeld über mehr als zwei nacheinander angeordneten Magnetpaare erzielt werden kann.

Schließlich ist aus der DE-U-92 18 403 und der DE-U-9320159 eine gattungsgemäße Vorrichtung mit mehreren Magnetplattenpaaren bekannt, die abwechselnd in 3 einem Winkel von 90° zueinander angeordnet sind. Die Schriften enthalten keinen Hinweis auf die Polarisationsrichtung der Magnetplattenpaare und damit auf ein sich gleichsinnig drehendes Magnetfeld im Durchströmungsraum.

Aufgabe der Erfindung ist es, ein Verfahren und eine Vorrichtung zur magnetischen Wasserbehandlung zu optimieren und eine hohe Effektivitätzu schaffen. Die Aufgabe wird mit einem Verfahren mit den Merkmalen des Anspruchs 1 und mit eine Vorrichtung gemäß Anspruch 9 gelöst, vorteilhafte Weiterbildungen sind in den Unteransprüchen gekennzeichnet.

Erfindungsgemäß wird das Wasser zwischen Magnetpaaren mit gleicher Polung durchgeführt, wobei mindestens zwei Magnetpaare aufeinanderfolgend angeordnet sind, deren Magnetflußrichtungen um einen Winkel a zueinander versetzt verlaufen. Es werden mehrere aufeinanderfolgende Magnetpaare verwendet, deren Magnetflußrichtung jeweils gleichsinnig versetzt ist, so daß ein über die Länge des Durchströmungsraumes gedrehtes Magnetfeld erzeugt wird. Vorzugsweise wird ein rechtsdrehendes Magnetfeld erzeugt.

Ferner wird erfindungsgemäß die Durchströmungsgeschwindigkeit auf mindestens 1,6 m/s, vorzugsweise 3 bis 12 m/s eingestellt, wobei eine Magnetflußdichte von mindestens 3600 Gauß, vorzugsweise 6000 bis 7000 Gauß eingestellt wird. Die Durchströmungsgeschwindigkeit und die Mangetflußdichte werden vorzugsweise aufeinander abgestimmt, wobei beispielsweise die Magnetflußdichte durch die Magnetisierung und die Anordnung der Magnete fest vorgegeben ist und die Durchflußgeschwindigkeit mit entsprechenden Einrichtungen geregelt wird.

Um eine optimierte Durchflußgeschwindigkeit zur Magnetisierung zu erzielen, kann eine Mehrzahl von Vorrichtungen mit Magnetpaaren vorhanden sein, wobei bei Unterschreitung eines entsprechenden Durchflußvolumens und damit der Herabsetzung der Fließgeschwindigkeit und des Drucks druckgesteuerte Ventile einzelne der Vorrichtungen abschalten, so daß eine oder mehrere restliche Vorrichtungen mit einer optimalen Fließgeschwindigkeit beaufschlagt werden. Eine derartige Anordnung aus einer Mehrzahl von Vorrichtungen ist insbesondere vor größeren Aggregaten, wie Heißwasserbereitern oder Heizungsanlagen sinnvoll.

Erfindungsgemäß konnte herausgefunden werden, daß es mit dem erfindungsgemäßen Verfahren nicht nur gelingt, den im Wasser enthaltenen Kalk bezüglich seines Verkrustungsverhaltens zu beeinflussen. Vielmehr wird durch einen Eingriff in das Kristallisationsverhalten des Kalks offenbar auch derart stark in das Löslichkeitsprodukt des Kalks im Wasser eingegriffen, daß mit dem erfindungsgemäßen Verfahren nicht nur Kalkverkrustungen vermieden, sondern auch bestehende Verkrustungen bis auf eine dünne Restschicht abgebaut werden.

Die Erfindung wird anhand einer Zeichnung beispielhaft erläutert. Es zeigen dabei
- Fig. 1: stark schematisiert eine Vorrichtung zum Durchführen des erfindungsgemäßen Verfahrens in einem Längsschnitt;
- Fig. 2: eine Vorrichtung nach Anspruch 1 in einer stirnseitigen Ansicht in Wasserflußrichtung;
- Fig. 3: schematisch eine Vorrichtung mit mehreren Durchströmbereichen zum Einstellen einer optimalen Fließgeschwindigkeit.

Das erfindungsgemäße Verfahren sieht vor, Wasser entlang einer Strömungsrichtung 1 durch Zwischenräume 2, die von Magnetblöcken 3 begrenzt werden, zu führen. Die Magnete 3 sind dabei sich gegenüberliegend angeordnete Blockmagnete, wobei eine Mehrzahl von Magnetpaaren beispielsweise 2 bis 8 Magnetpaare vorhanden sind, welche aufeinanderfolgend bezüglich der Strömungsrichtung 1 hintereinanderliegend angeordnet sind. Die Magnetpaare sind bezüglich der Längserstreckung einer Durchströmungsvorrichtung 4, in der sie angeordnet sind, bezüglich der Längsachse 5 schraubengangartig um die Längsachse 5 gedreht angeordnet. Beispielsweise beträgt der Winkelversatz von einem Paar zum nächsten Paar 30°, wobei jedoch auch 60° oder 90° möglich sind.

Die Vorrichtung 4 ist insbesondere als zylindrisches Rohr 6 mit verjüngt ausgebildeten stirnseitigen Schraubstutzen 7 mit Gewinden 8 ausgebildet. Zur Unterbringung der Magnetblöcke in dem im Querschnitt kreisförmigen Raum des Rohres 6 können die Magnetblöcke 3 beispielsweise in kreisscheibenförmigen Kunststoffscheiben 9 eingebettet sein, wobei der Bereich 2 zwischen den Blöcken 3 als Durchflußraum 2 freigespart ist. Zwischen den Kunststoffscheiben 9 können die Scheiben 9 mit einem geringen Abstand ausbildende kreisringförmige Distanzscheiben 10 angeordnet sein. Sofern die Distanzscheiben 10 mit einer entsprechenden ersten Codierung immer gleich orientiert in der Vorrichtung 4 angeordnet sind und zudem jede Distanzscheibe 10 zur nächsten um den Versetzwinkel versetzte Mittel für die festlegende Orientierung der nachfolgenden Kunststoffscheibe 9 (zweite Codierung) aufweisen - beispielsweise Stecknocken an der Distanzscheibe 10 und entsprechend aufnehmende Einrichtungen an der Kunststoffscheibe 9 - kann die Orientierung der aufeinanderfolgenden Magnetpaare mittels der Distanzscheiben und der Kunststoffscheiben 9 festgelegt werden.

Bei einer weiteren vorteilhaften Ausführungsform (Fig. 3) zur Erzielung einer optimierten Durchflußgeschwindigkeit ist eine Mehrzahl von Vorrichtungen 4 in einem Gehäuse 11 gebündelt angeordnet. Die Vorrichtungen 4 können hierbei zylindrisch rundlich ausgebildet sein, es ist jedoch auch eine Ausbildung mit quadratischem oder eckigem, insbesondere sechseckigem Querschnitt möglich. Bei Vorrichtungen 4, die einen quadratischen oder eckigen Querschnitt aufweisen, läßt sich eine Bündelung relativ einfach erzielen, wobei in diesem Fall das Gehäuse 11 ebenfalls einen vier- oder vieleckigen Querschnitt - je nach Anzahl und Querschnitt der Vorrichtungen 4 - aufweist. Den Vorrichtungen 4 ist im Bereich eines Einströmendes 12 eine Ventileinrichtung 14 vorgeordnet. Die Ventileinrichtung 14 kann elektromagnetisch oder druckgesteuert eine Vorrichtung 4 oder eine Mehrzahl von Vorrichtungen 4 oder alle Vorrichtungen 4 zur Durchströmung mit entlang der Strömungsrichtung 1 ins Einströmende 12 einströmenden Wasser freigeben. Somit kann in den Vorrichtungen 4 immer eine optimale Strömungsgeschwindigkeit erzielt werden. Nach dem Durchtreten durch die Vorrichtungen 4 strömt das Wasser aus einer Ausflußöffnung 13, beispielsweise in eine Hauptwasserleitung eines Haushaltswassernetzes ein.

Es hat sich herausgestellt, daß eine Mindestfließgeschwindigkeit von 1,6 m/s vorteilhaft ist, wobei die Fließgeschwindigkeit besonders bevorzugt 3 bis 12 m/s beträgt. Die Magnetflußdichte zwischen den Magnetblöcken sollte mindestens 3600 Gauß, vorzugsweise 6000 bis 7000 Gauß betragen.

Die Erfindung wird anhand eines Beispiels erläutert, welches an der Staatlichen Lehr- und Forschungsanstalt für Gartenbau, Neustadt-Mussbach durchgeführt wurde.

Hortensien sind Pflanzen, welche eine blaue Blüte zeigen, wobei jedoch eine Blaufärbung der Blüte nur erreicht wird, wenn der Standort und/oder das Wasser für diese Pflanzen kalkarm ist. Bei einer Verwendung von Wasser mit einer Carbonathärte von 25° dH ist eine erfolgreiche Blaufärbung nur dann möglich, wenn eine Entkalkung des Wassers vorgenommen wird, die beispielsweise durch eine chemische Wasserenthärtung erreicht wird. Für den vergleichenden Versuch wurden Hortensien der Sorte "Elbtal" einmal mit Wasser gegossen, welches mit dem erfindungsgemäßen Verfahren behandelt wurde, einmal mit einer Aluminiumnachdüngung in den ersten drei Wochen (20 mg Aluminium pro Liter) und einmal ohne Aluminiumnachdüngung, wobei das Wasser täglich während der ersten vier Wochen in der Treiberei eine Stunde im Vorratsbecken umgewälzt und dabei entsprechend erfindungsgemäß behandelt wurde. Zum Vergleich wurde eine chemische Enthärtung mit Aluminiumnachdüngung in den ersten drei Treibwochen (20mg Aluminium pro Liter) und einmal ohne Aluminiumnachdüngung durchgeführt.

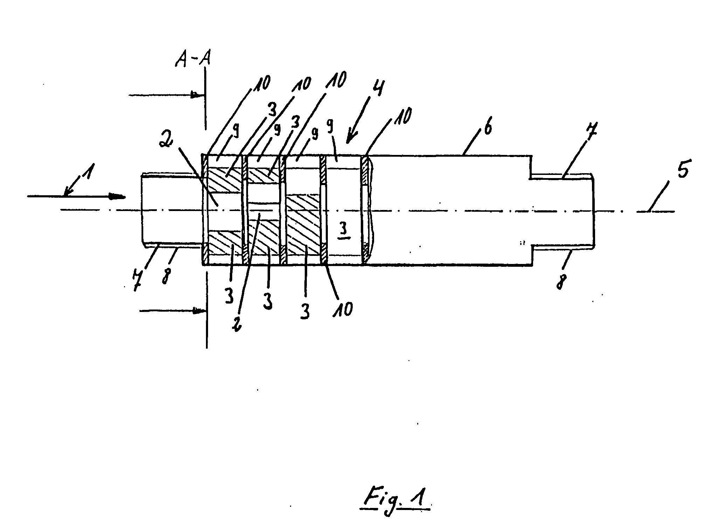

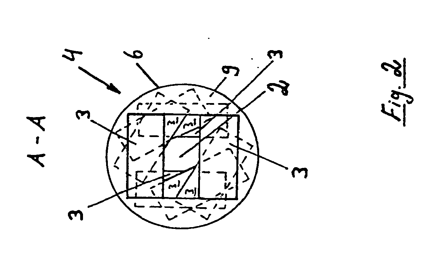

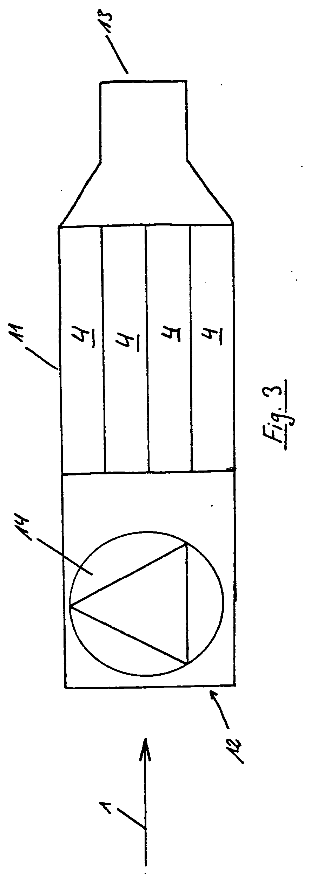

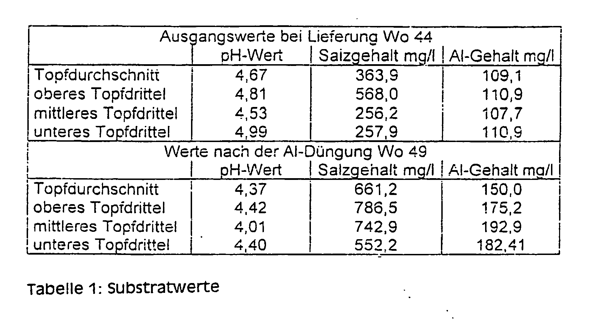

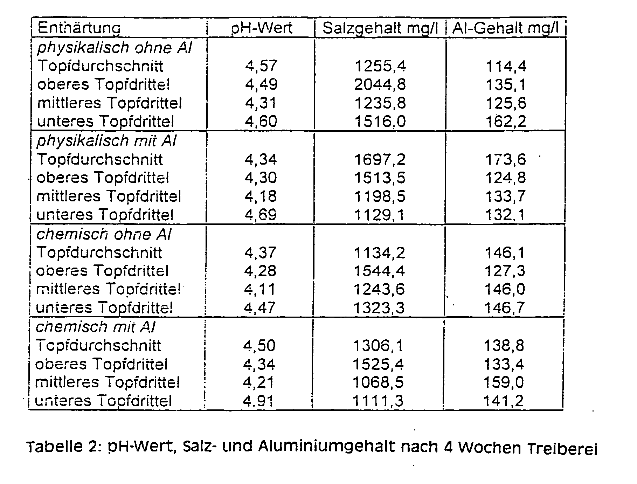

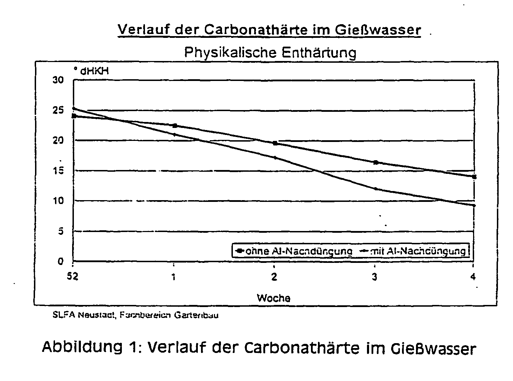

Die Ausgangswerte bei der Lieferung der Pflanzen lassen sich Tabelle 1 entnehmen. Nach vier Wochen Treiberei wurden die in der Tabelle 2 dargestellten Werte ermittelt. Der pH-Wert als entscheidende Größe für die Aluminiumaufnahme unterscheidet sich nach den ersten vier Kulturwochen nur unwesentlich zwischen der chemischen Enthärtung und der magnetischen Behandlung. Aus den dargestellten Meßwerten ist zu erkennen, daß der Einsatz des erfindungsgemäßen Verfahrens den zu erwartenden pH-Anstieg verhindert hat, wobei die gemessenen Aluminiumgehalte im Substrat auf ein normales Verhalten des Aluminiums im Substrat hinweisen. Unerwartet trat im Kulturverlauf eine Absenkung der Carbonathärte bei Magneteinsatz in der Nährlösung mit und ohne Aluminium auf (Abbildung 1), wobei der stärkere Abfall der Carbonathärte mit Aluminium in der flüssigen Nachdüngung teilweise chemisch mit der enthärtenden Wirkung der von Aluminium abgegebenen H-Ionen zu erklären ist. Das Ausmaß ist jedoch höher als es nach der Aluminiummenge im Wasser sein dürfte.

Auf den Kulturtischen fiel bei beiden Behandlungsmethoden Kalk aus, wobei die veränderte Kristallstruktur der auf dem Tischbelag ausgefallenen Salze der unterschiedlich behandelten Nährlösungen deutlich war. Während sich bei der chemischen Enthärtung die Salze nur mit hohem Kraftaufwand entfernen ließen (Verkrustung), ist der Kalkniederschlag bei der magnetischen Behandlung leicht abwischbar zu entfernen, wobei dieser Niederschlag nicht verkrustet ist sondern eher einem Schlamm ähnelt. Als Versuchsergebnisse kann festgestellt werden, daß beide Verfahren eine zufriedenstellende Blaufärbung ergeben, wobei die Ausfärbung bei chemischer und physikalischer Behandlung des Gießwassers und flüssiger Aluminiumnachdüngung während der Treiberei am besten waren; ohne Aluminiumnachdüngung erhöhte sich der Anteil lila gefärbter Blüten geringfügig. In beiden Gruppen erwiesen sich beide Methoden der Behandlung des Wassers als gleichwertig.

Die erfindungsgemäße Behandlung von Wasser ergibt somit in einfacher und kostengünstiger Weise eine effektive scheinbare Wasserenthärtung, bei der der Kalk dem Wasser nicht entnommen wird, sondern lediglich offenbar in seiner Kristallstruktur derart verändert wird, daß er für die gebräuchlichsten Anwendungen unschädlich ist. Bei dem Verfahren ist von Vorteil, daß es einfach und kostengünstig durchführbar ist und keine aufwendige chemische Wasserenthärtung notwendig ist.

## Patentansprüche

1. Verfahren zum Verhindern von verkrustenden Kalkablagerungen und zur Absenkung der messbaren Carbonathärte von Wasser, wobei das Wasser durch eine Mehrzahl von sich gegenüberliegend einen Abstand zwischen sich begrenzenden Magnetpaaren mit Quadermagneten (3) durchgeführt wird, sich die Magnetpole auf den Breitseitenwandungen der Magnete (3) befinden und ein Magnetpaar mit zwei Magneten (3) gleich orientierter Polung je einen Durchflussraum (2) für das Wasser zwischen sich begrenzend angeordnet ist, und weitere Magnetpaare in Strömungsrichtung (1) des Wassers nachgeordnet vorhanden sind,
**dadurch gekennzeichnet, dass**
der Winkel zwischen den aufeinanderfolgenden Magnetpaaren zwischen 10° und 170°, insbesondere 30° bis 90° beträgt, derart, dass das Wasser beim Durchfließen der Vorrichtung mit Magnetflüssen durchsetzt wird, deren Richtungen über die nacheinander angeordneten Durchflussräume (2) in Strömungsrichtung (1) gleichsinnig verdreht verlaufen, so dass ein sich über die Länge der nacheinander angeordneten Durchflussräume gleichsinnig drehendes Magnetfeld erzeugt wird, und dass die Fließgeschwindigkeit des Wassers im Magnetfeld auf mindestens 1,6 m/s eingestellt wird.

2. Verfahren nach Anspruch 1,
**dadurch gekennzeichnet,**
**dass** eine Fließgeschwindigkeit von 3 bis 12 m/s eingestellt wird.

3. Verfahren nach Anspruch 1,
**dadurch gekennzeichnet,**
**dass** die Magnetflussdichte auf mindestens 3600 Gauß eingestellt wird.

4. Verfahren nach einem der vorhergehenden Ansprüche,
**dadurch gekennzeichnet,**
**dass** die Magnetflussdichte auf 6000 bis 7000 Gauß eingestellt wird.

5. Verfahren nach einem der vorhergehenden Ansprüche,
**dadurch gekennzeichnet,**
**dass** zur Regelung der Durchflussgeschwindigkeit eine Ventileinrichtung (14) in Strömungsrichtung (1) vorgeordnet wird.

6. Verfahren nach einem der vorhergehenden Ansprüche,
**dadurch gekennzeichnet,**
**dass** Magnete mit einer Größe von 25 x 15 x 5 mm verwendet werden.

7. Verfahren nach einem der vorhergehenden Ansprüche,
**dadurch gekennzeichnet,**
**dass** zwischen den Magnetpaaren ein Abstand von 2 mm eingestellt wird.

8. Verfahren nach einem der vorhergehenden Ansprüche,
**dadurch gekennzeichnet,**
**dass** zur Regelung der Durchflussgeschwindigkeit mehrere Durchflussräume mit Magnetpaaren parallel zueinander einzeln ansteuerbar angeordnet werden.

9. Vorrichtung zum Durchsetzen von fließendem Wasser mit einem Magnetfeld, wobei eine Mehrzahl von sich gegenüberliegend, einen Abstand zwischen sich begrenzenden Magnetpaaren mit Quadermagneten (3) vorhanden sind, wobei sich die Magnetpole auf den Breitseitenwandungen der Magnete (3) befinden und ein Magnetpaar mit zwei Magneten (3) gleich orientierter Polung je einen Durchflussraum (2) für das Wasser zwischen sich begrenzend angeordnet ist, insbesondere zum Durchführen eines Verfahrens nach einem der vorhergehenden Ansprüche,
**dadurch gekennzeichnet,**
**dass** weitere Magnetpaare in Strömungsrichtung (1) des Wassers nachgeordnet vorhanden sind, wobei jedes in Strömungsrichtung (1) nachgeordnete weitere Magnetpaar zum vorherigen Magnetpaar schraubengangartig um die Längsachse (5) der Vorrichtung (4) verdreht angeordnet ist, und der Winkel zwischen den aufeinanderfolgenden Magnetpaaren zwischen 10° und 170°, insbesondere 30° bis 90° beträgt, in der Art, dass ein sich in Strömungsrichtung (1) gleichsinnig drehendes Magnetfeld erzielt wird.

10. Vorrichtung nach Anspruch 9
**dadurch gekennzeichnet,**
**daß** das Magnetfeld rechtsdrehend ist.

11. Vorrichtung nach Anspruch 9 oder 10,
**dadurch gekennzeichnet,**
**dass** die Vorrichtung (4) insbesondere als zylindrisches Rohr (6) mit verjüngt ausgebildeten stirnseitigen Schraubstutzen (7) mit Gewinden (8) ausgebildet ist, wobei zur Unterbringung der Magnetblöcke in dem im Querschnitt kreisförmigen Raum des Rohres (6) die Magnetblöcke (3) in kreisscheibenförmigen Kunststoffscheiben (9) eingebettet sind, wobei der Abstand zwischen den Blöcken (3) als Durchflussraum (2) freigespart ist.

12. Vorrichtung nach Anspruch 11,
**dadurch gekennzeichnet,**
**dass** die Kunststoffscheiben (9) über einen geringen Abstand ausbildende kreisringförmige Distanzscheiben (10) aneinander angeordnet sind.

13. Vorrichtung nach einem der Ansprüche 9 bis 12,
**dadurch gekennzeichnet,**
**dass** die Distanzscheiben (10) mit einer ersten Codierung immer gleich orientiert in der Vorrichtung (4) angeordnet sind und zudem jede Distanzscheibe (10) zur nächsten um einen Winkel versetzte Mittel für die festlegende Orientierung der nachfolgenden Kunststoffscheiben (9) (zweite Codierung) aufweisen.

14. Vorrichtung nach Anspruch 13,
**dadurch gekennzeichnet,**
**dass** die zweite Codierung Stecknocken oder Stecknuten an der Distanzscheibe (10) und entsprechend aufnehmende oder einsteckende Einrichtungen an der Kunststoffscheibe (9) umfasst.

15. Vorrichtung nach einem der Ansprüche 9 bis 14,
**dadurch gekennzeichnet,**
**dass** eine Mehrzahl von Vorrichtungen (4) in einem gemeinsamen Gehäuse (11) angeordnet ist, wobei den Vorrichtungen (4) in Strömungsrichtung (1) des Wassers eine Ventileinrichtung (14) vorgeordnet angeordnet ist, wobei die Ventileinrichtung (14) eine elektromagnetisch oder druckgesteuerte Ventileinrichtung (14) ist, welche druckgesteuert oder elektromagnetisch zumindest eine Einrichtung (4) oder eine Mehrzahl von Einrichtungen (4) oder alle Einrichtungen (4) zur Durchströmung mit Wasser freigibt, um eine optimale Durchströmungsgeschwindigkeit der Vorrichtungen (4) mit Wasser sicherzustellen.

16. Verwendung einer Vorrichtung nach einem der Ansprüche 9 bis 15 als Handgriff einer Duschvorrichtung.

17. Verwendung einer Vorrichtung nach einem der Ansprüche 9 bis 15 in einem Handgriff- oder Mündungsstück eines Schlauches, insbesondere Gartenschlauches.

## Claims

1. Method for preventing furring calcifications and for reducing the measurable carbonate hardness of water, the water being guided through a plurality of opposing pairs of magnets with cuboid magnets (3) defining a distance between themselves, the magnetic poles being located on the broadside walls of the magnets (3) and one pair of magnets with two magnets (3) of the same polarity being positioned so as to define between themselves a respective throughflow chamber for the water and further pairs of magnets being provided downstream seen in the flow direction (1) of the water, **characterised in that** the angle between the successive pairs of magnets is between 10° and 170°, in particular 30° to 90°, such that when the water flows through the apparatus, it is penetrated by magnetic fluxes, the directions of which run rotated in the same direction seen in the flow direction (1) over the successively positioned throughflow chambers (2), such that a magnetic field rotating in the same direction over the length of the successive throughflow chambers is produced, and **in that** the flow rate of the water in the magnetic field is adjusted to at least 1.6 m/s.

2. Method according to claim 1, **characterised in that** a flow rate of from 3 to 12 m/s is adjusted.

3. Method according to claim 1, **characterised in that** the magnetic flux density is adjusted to at least 3,600 gauss.

4. Method according to any one of the preceding claims, **characterised in that** the magnetic flux density is adjusted to 6,000 to 7,000 gauss.

5. Method according to any one of the preceding claims, **characterised in that** a valve device (14) is positioned upstream seen in the flow direction (1) to control the throughflow rate.

6. Method according to any one of the preceding claims, **characterised in that** magnets with dimensions of 25 x 15 x 5 mm are used.

7. Method according to any one of the preceding claims, **characterised in that** a distance of 2 mm is adjusted between the pairs of magnets.

8. Method according to any one of the preceding claims, **characterised in that** a plurality of throughflow chambers with pairs of magnets is positioned parallel to one another and may be activated individually to control the throughflow rate.

9. Apparatus for penetrating flowing water with a magnetic field, a plurality of opposing pairs of magnets with cuboid magnets (3) defining a distance between themselves are provided, the magnetic poles being located on the broadside walls of the magnets (3) and one pair of magnets with two magnets (3) of the same polarity being positioned so as to define between themselves a respective throughflow chamber (2) for the water, in particular for carrying out a process according to one of the preceding claims, **characterised in that** further pairs of magnets are positioned downstream seen in the flow direction (1) of the water, each further pair of magnets positioned downstream seen in the flow direction (1) being in a position rotated about the longitudinal axis (5) of the apparatus (4) in the manner of a screw thread with respect to the preceding pair of magnets, and the angle between the successive pairs of magnets amounting to between 10° and 170°, in particular from 30° to 90°, such that a magnetic field rotating in the same direction seen in the flow direction (1) is produced.

10. Apparatus according to claim 9, **characterised in that** the magnetic field rotates to the right.

11. Apparatus according to either claim 9 or claim 10, **characterised in that** the apparatus (4) is configured in particular as a cylindrical tube (6) with tapered end-face screw sockets (7) with threads (8), the magnetic blocks (3) being embedded in circular plastics material discs (9) for accommodating said magnetic blocks in the cross-sectionally circular chamber of the tube (6), the distance between the blocks (3) being recessed as throughflow chamber (2).

12. Apparatus according to claim 11, **characterised in that** the plastics material discs (9) are positioned against one another via annular distance plates (10) forming a slight spacing.

13. Apparatus according to any one of claims 9 to 12, **characterised in that** the distance plates (10) are positioned in an ever identical orientation in the apparatus (4) with a first coding and each distance plate (10) also has means displaced by an angle with respect to the next distance plate for the determining orientation of the successive plastics material discs (9) (second coding).

14. Apparatus according to claim 13, **characterised in that** the second coding comprises insertion cams on, or insertion grooves in, the distance plate (10) and correspondingly receiving or inserting means on the plastics material disc (9).

15. Apparatus according to any one of claims 9 to 14, **characterised in that** a plurality of apparatus (4) is positioned in a common housing (11), a valve device (14) being positioned upstream of the apparatus (4) seen in the flow direction (1) of the water, the valve device (14) being an electromagnetically or pressure-controlled valve device (14) which releases electromagnetically or in a pressure-controlled manner at least one device (4) or a plurality of devices (4) or all devices (4) for the water throughflow to ensure an optimum water throughflow rate of the devices (4).

16. Use of an apparatus according to any one of claims 9 to 15 as the handle of a shower device.

17. Use of an apparatus according to any one of claims 9 to 15 in a handle or mouthpiece of a hose, in particular a garden hose.

## Revendications

1. Procédé pour empêcher les dépôts de calcaire qui s'incrustent et pour abaisser la dureté carbonate mesurable de l'eau, l'eau étant conduite à travers une pluralité de paires d'aimants en vis-à-vis, délimitant une distance entre elles, avec des aimants parallélépipédiques (3), les pôles magnétiques se trouvant sur les parois latérales larges des aimants (3) et une paire d'aimants est disposée avec deux aimants (3) d'une polarité de même orientation, chacun délimitant entre eux un espace d'écoulement (2) pour l'eau, et d'autres paires d'aimants sont présentes disposées successivement dans la direction d'écoulement (1) de l'eau,
**caractérisé en ce que**,
l'angle entre les paires d'aimants successifs est compris entre 10° et 170°, en particulier de 30 à 90°, de telle sorte que l'eau est traversée par des flux magnétiques en traversant l'installation, dont les directions évoluent en tournant dans le même sens, sur les espaces d'écoulement (2) disposés successivement dans la direction de l'écoulement (1), de sorte à produire un champ magnétique tournant dans le même sens sur la longueur des espaces d'écoulement disposés successivement, et **en ce que** la vitesse d'écoulement de l'eau dans le champ magnétique est ajustée à au moins 1,6 m/s.

2. Procédé selon la revendication 1,
**caractérisé en ce que**,
une vitesse d'écoulement de 3 à 12 m/s est ajustée.

3. Procédé selon la revendication 1,
**caractérisé en ce que**,
la densité de flux magnétique est ajustée à au moins 3 600 gauss.

4. Procédé selon l'une quelconque des revendications précédentes,
**caractérisé en ce que**,
la densité de flux magnétique est ajustée de 6 000 à 7 000 gauss.

5. Procédé selon l'une quelconque des revendications précédentes,
**caractérisé en ce que**,
pour réguler la vitesse d'écoulement, un dispositif à vanne (14) est disposé en amont dans la direction de l'écoulement (1).

6. Procédé selon l'une quelconque des revendications précédentes,
**caractérisé en ce que**,
des aimants ayant une taille de 25 x 15 x 5 mm sont employés.

7. Procédé selon l'une quelconque des revendications précédentes,
**caractérisé en ce que**,
une distance de 2 mm est ajustée entre les paires d'aimants.

8. Procédé selon l'une quelconque des revendications précédentes,
**caractérisé en ce que**,
pour réguler la vitesse d'écoulement, plusieurs espaces d'écoulement ayant des paires d'aimants parallèles l'une à l'autre, sont disposés de façon à pouvoir être commandés individuellement.

9. Installation pour appliquer un champ magnétique à de l'eau courante, dans lequel une pluralité de paires d'aimants en vis-à-vis, délimitant une distance entre elles, avec des aimants parallélépipédiques (3) sont présents, les pôles magnétiques se trouvant sur les parois latérales larges des aimants (3) et une paire d'aimants est disposée avec deux aimants (3) d'une polarité de même orientation, délimitant chacun un espace d'écoulement (2) pour l'eau entre eux, en particulier pour réaliser un procédé selon l'une quelconque des revendications précédentes,
**caractérisée en ce que**,
des paires d'aimants supplémentaires sont disposées successivement dans la direction d'écoulement (1) de l'eau, chaque paire d'aimants supplémentaire disposée successivement dans la direction d'écoulement (1), étant disposée, par rapport à la paire d'aimants précédente, à la façon d'un filetage tournant autour de l'axe longitudinal (5) de l'installation (4), et l'angle entre les paires d'aimants successifs étant compris entre 10° et 170°, en particulier de 30° à 90°, de sorte à obtenir un champ magnétique tournant dans le même sens dans la direction d'écoulement (1).

10. Installation selon la revendication 9,
**caractérisée en ce que**,
le champ magnétique est dextrogyre.

11. Installation selon la revendication 9 ou 10,
**caractérisée en ce que**,
l'installation (4) est réalisée en particulier sous forme d'un tube cylindrique (6) avec des supports filetés du côté frontal (7) constitués en cône, avec des filetages (8), où pour loger les blocs d'aimants dans l'espace à section circulaire du tube (6), les blocs d'aimants (3) sont insérés dans des disques de matière plastique (9) de forme discoïdale, la distance dégagée entre les blocs (3) étant gagnée en tant qu'espace d'écoulement (2).

12. Installation selon la revendication 11,
**caractérisée en ce que**,
les disques de matière plastique (9) sont disposés l'un sur l'autre sur des disques de calage (10) annulaires formant une faible distance.

13. Installation selon l'une quelconque des revendications 9 à 12,
**caractérisée en ce que**,
les disques de calage (10) avec un premier codage, sont toujours disposés avec la même orientation dans l'installation (4) et en outre chaque disque de calage (10) présente un moyen décalé d'un angle, par rapport au disque suivant, pour fixer l'orientation des disques de matière plastique suivants (9) (deuxième codage).

14. Installation selon la revendication 13,
**caractérisée en ce que**,
le deuxième codage comprend des ergots d'engagement ou des rainures d'engagement sur le disque de calage (10), et des dispositifs réceptacles ou enfichables, de manière correspondante, sur le disque de matière plastique (9).

15. Installation selon l'une quelconque des revendications 9 à 14,
**caractérisée en ce que**,
une pluralité d'installations (4) est disposée dans un boîtier commun (11), un dispositif à vanne (14) étant disposé en amont des installations (4) dans la direction d'écoulement (1) de l'eau, le dispositif à vanne (14) étant un dispositif à vanne à commande électromagnétique ou pressurisée (14), lequel dispositif libère par commande pressurisée ou électromagnétique, au moins un dispositif (4) ou une pluralité de dispositifs (4) ou tous les dispositifs (4) pour que l'eau s'écoule, afin d'assurer une vitesse d'écoulement optimale de l'eau dans les installations (4).

16. Utilisation d'une installation selon l'une quelconque des revendications 9 à 15, en tant que poignée d'une installation de douche.

17. Utilisation d'une installation selon l'une quelconque des revendications 9 à 15, dans une pièce de poignée ou d'ouverture d'un tuyau, en particulier d'un tuyau de jardin.
